# EUROPÄISCHE PATENTSCHRIFT

(11) **EP 1 084 353 B1**
(45) Veröffentlichungstag und Bekanntmachung des Hinweises auf die Patenterteilung: **29.10.2003**
(21) Anmeldenummer: 00925058.0
(22) Anmeldetag: 27.03.2000
(51) Int. Cl.: F16F 13/26, F16F 3/10

(54) **FEDERRATENSCHALTBARES MOTORLAGER**
SPRING-RATE CONTROLLED MOTOR BEARING
SUPPORT DE MOTEUR A RAIDEUR DE RESSORTS COMMANDEE

(30) Priorität: 08.04.1999 DE 19915710
(43) Veröffentlichungstag der Anmeldung: 21.03.2001
(73) Patentinhaber: ZF Lemförder Metallwaren AG, 49441 Lemförde (DE)
(72) Erfinder: ERSOY, Metin, D-65396 Walluf (DE); SIEMER, Hubert, D-49413 Dinklage (DE)
(86) Internationale Anmeldenummer: DE0000951
(87) Internationale Veröffentlichungsnummer: WO00061964

(56) Entgegenhaltungen:
- DE-A- 3 403 002
- US-A- 5 228 663
- US-A- 5 401 008

## Beschreibung

Die Erfindung betrifft ein federratenschaltbares Motorlager mit einem Traglager und einem Auflagerelement, welches mindestens zwei parallel oder seriell zwischen Traglager- und Auflagerelement angeordnete Federlemente aufweist, wobei eines der Federelemente durch eine Schaltvorrichtung blockierbar ist.

Motorlager der gattungsgemäßen Art sind allgemein im Stand der Technik bekannt und vorzugsweise dazu bestimmt, den Verbrennungsmotor eines Kraftfahrzeuges zu lagern und dabei die Übertragung störender Schwingungen vom Motor auf die Karosserie zu verhindern.

Im Fahrzeugbetrieb treten vom Motor verursachte störende Schwingungen im wesentlichen in zwei unterschiedlichen Gattungen auf und erfordern von daher zur Schwingungsdämpfung unterschiedliche Steifigkeiten der verwendeten Motorlager. Zur Realisierung der unterschiedlichen Dämpfungscharakteristiken können hydraulisch gedämpfte Motorlager eingesetzt werden, bei denen ein zweites Federelement zum ersten beispielsweise als konventionelles Gummilager ausgebildeten Federelement parallel oder seriell geschaltet werden. Ist die Federwirkung beider seriell geschalteter Federelemente wirksam, so ist die Gesamtsteifigkeit des Motorlagers geringer als die einzelnen Federsteifigkeiten der beiden verwendeten Federelemente. Wird ein derartiges Motorlager mittels einer entsprechenden Schaltvorrichtung blockiert, so bedeutet dies, daß der durch das Motorlager fließende Kraftfluß nur über ein Federelement läuft, dessen Steifigkeit allein wirksam und wesentlich höher ist als bei der gleichzeitigen Wirksamkeit beider Federelemente.

Um eines der Federelemente zu blockieren, sind im Stand der Technik unterschiedliche Realisierungsmöglichkeiten bekannt geworden. So ist beispielsweise aus der DE 41 30 362 ein aus zwei Elastomer-Federelementen aufgebautes Motorlager bekannt, bei dem die Blockierung eines Federelementes mittels eines hydraulisch beaufschlagten Druckkissens erfolgt, dergestalt, daß zwei Gehäuseelemente, die das zu blockierende Federelement zwischen sich einschließen, durch Aufpumpen des Druckkissens kraftschlüssig miteinander in Kontakt gebracht werden. Diese Art der Blockierung eines Federelementes hat den Nachteil, daß für derartige Motorlager immer eine externe hydraulische Energiequelle notwendig ist, welche mit den entsprechenden Anschlußleitungen an das Motorlager relativ viel Bauraum beansprucht und darüber hinaus vom Einbau her arbeits- und kostenintensiv ist.

Die oben genannte Schrift aus dem Stand der Technik offenbart darüber hinaus die Möglichkeit, die Blockierung eines Federelementes durch einen Stellmotor mit durch diesen betätigtem Druckstempel zu realisieren. Durch den Stellmotor mit Druckstempel werden zwei Abstützplatten zur kraftschlüssigen Anlage aneinandergebracht, so daß auf diese Weise das zweite Federelement in Form eines Gummikörpers überbrückt und außer Funktion gesetzt wird.

Da der Stellmotor den Stempel zum Blockieren des zweiten Federelementes mit Hilfe einer Schraubenspindel bewegt, sind bei diesem Ausführungsbeispiel die übertragbaren Axial- und Radialkräfte begrenzt oder die Schalteinrichtung nimmt aufgrund ihrer Dimensionierung für größere Kräfte einen nicht unerheblichen Bauraum ein, was wiederum den Einsatz des gesamten Motorlagers einschränkt.

Darüber hinaus ist aus der DE 34 03 002 ein Motorlager bekannt, welches auf dem Zusammenwirken zweier Federelemente mit unterschiedlicher Federcharakteristik und einer Schaltkupplung beruht. Die elektromagnetisch betätigbare Schaltkupplung ist mit dem relativ härteren Federelement in Reihe geschaltet. Die Schaltkupplung dient dazu, ein Lamellenpaket durch Magnetkräfte in eingeschaltetem Zustand zusammenzupressen, um auf diese Weise eine starre Verbindung zwischen dem ersten Federelement und dem Auflagerelement zu schaffen, so daß das zweite Federelement außer Funktion gesetzt wird. Auch bei diesem Motorlager sind der Übertragung axialer und radialer Kräfte aufgrund der aufzubringenden Reibkräfte zwischen den einzelnen Lamellen der Schaltkupplung Grenzen gesetzt, die in bestimmten Bereichen zwar durch eine großvolumigere Bauweise ausgeglichen werden können, insgesamt jedoch hinsichtlich Baugröße und Gewicht nachteilig sind.

Aufgabe der vorliegenden Erfindung ist es daher, ein Motorlager der gattungsgemäßen Art derart weiterzuentwickeln, daß sich zum einen eine gewünschte harte Federcharakteristik für den Fahrbetrieb und eine weiche Federcharakteristik für den Motorleerlauf ergibt. Die unterschiedlichen Federcharakteristiken sind insbesondere bei den seit einiger Zeit eingesetzten direkt eingespritzten Dieselmotoren von großer Bedeutung, da bei diesen Motoren die auftretenden Leerlaufschwingungen wesentlich höher sind als bei den bisher in der Kraftfahrzeugtechnik verwendeten Diesel- oder Benzinmotoren. Darüber hinaus soll das Lager geringe Abmessungen und wenig Gewicht aufweisen. Außerdem ist gefordert, daß die verwendete Schaltvorrichtung außerordentlich große Axialkräfte in Größenordnungen von ca. 10 kN und Radialkräfte übertragen kann, wobei die Schaltvorrichtung kurze Umschaltzeiten für die Blockierung bzw. Freigabe des festzusetzenden Federelementes benötigen soll und wobei komplizierte äußere Nebenaggregate nicht mehr notwendig sind.

Diese Aufgabe wird erfindungsgemäß durch die im kennzeichnenden Teil des Anspruches 1 vermittelte Lehre gelöst. Vorteilhafte weitere Ausgestaltungen der Erfindung ergeben sich aus den Merkmalen der Unteransprüche. Bei dem erfindungsgemäßen federratenschaltbaren Motorlager ist vorgesehen, daß die Schaltvorrichtung ein Doppelkniehebelgetriebe aufweist.

Das Doppelkniehebelgetriebe zeichnet sich dadurch aus, daß durch geeignete Dimensionierung eine außerordentlich hohe Kraftverstärkung durch das Getriebe erzeugt werden kann, so daß die durch das Kniehebelgetriebe erzeugte sehr hohe Vorspannkraft im blockierten Zustand die gewünschte hohe Übertragung von Axialkräften im Bereich > 10 kN gewährleistet. Für die Gestaltung des Doppelkniehebelgetriebes hat es sich als besonders vorteilhaft erwiesen, daß mehrere Doppelkniehebelelemente mit je zwei Druckhebeln und je einem durch ein gemeinsames Betätigungsglied bewegbaren Stellhebel konzentrisch zur Motorlagermittelachse angeordnet sind, wobei der Stellhebel mit seinem äußeren, dem Betätigungsglied abgewandten Ende in einem Drehlager mit je einem Ende der beiden Druckhebel verbunden ist und die äußeren freien, dem Drehlager abgewandten Enden der Druckhebel jeweils mit dem Auflagerelement bzw. mit einer Zwischenplatte verbunden sind, welche zwischen dem ersten und zweiten Federelement angeordnet ist. Durch diese Gestaltung läßt sich das erfindungsgemäße Motorlager besonders kompakt gestalten, da die verwendeten Doppelkniehebelelemente klein gestaltet werden können und trotzdem ihr Zusammenwirken eine ausreichende Steifigkeit des Lagers im blockierten Zustand des Federelementes gewährleistet. Wird darüber hinaus ein Aufbau verwendet, bei dem das blockierbare Federelement aus mehreren konzentrisch zur Motorlagermittelachse in Längsrichtung parallel zu dieser ausgerichteten beabstandet zueinander angeordneten Schraubenfedern besteht, wobei die Schraubenfedern und die Doppelkniehebelelemente abwechselnd konzentrisch um die Motorlagermittelachse angeordnet sind, so kann das erfindungsgemäße Motorlager auf diese Weise nochmals kompakter gestaltet werden.

Es hat sich darüber hinaus als vorteilhaft erwiesen, das für die Bewegung der Stellhebel verantwortliche Betätigungsglied durch einen elektrischen Stellmotor mit einer Linearspindel in Längsrichtung der Motorlagermittelachse zu verschieben. Der Einsatz eines derartigen Antriebes ist nur deshalb möglich, da aufgrund des verwendeten Doppelkniehebelgetriebes nur noch geringe Verstellkräfte in der Größenordnung von 300 Newton in Axialrichtung aufzubringen sind. Diese Verstellkräfte lassen sich mit dem verwendeten Antrieb problemlos realisieren, wobei sich Umschaltzeiten der Schalteinrichtung vom Blockierzustand in den gelösten Zustand von ca. 0,5 Sek. ergeben können. Darüber hinaus bildet der zentrale, durch den elektrischen Stellmotor betätigte Spindelantrieb eine kostengünstige und platzsparende Antriebsvariante. Als weiterer Vorteil des verwendeten Antriebs ergibt sich aufgrund der notwendigen geringen axialen Verstellkräfte ein geringer Energieverbrauch. Außerdem erfordert der elektrische Antrieb nur den Anschluß mit zwei Zuleitungen für die Energieversorgung und Energiesteuerung.

Es hat sich darüber hinaus als zweckmäßig herausgestellt, daß die Schaltvorrichtung und das blockierbare Federelement von einem Gehäuse umschlossen sind, wobei sich das Gehäuse in blockiertem Zustand des Federelementes an einer konusförmigen Lagerfläche abstützt, die Bestandteil der Zwischenplatte zwischen erstem und zweiten Federelement ist. Die Abstützung des Gehäuses durch die konusförmige Lagerfläche bewirkt eine ausgezeichnete Übertragung der Axial- und Radialkräfte im Blockierzustand des Motorlagers und verhindert somit zuverlässig eine Kippneigung des oberhalb der Zwischenplatte angeordneten als Hydrolager ausgebildeten ersten Federelementes. Darüber hinaus kann das Gehäuse die innenliegenden Kniehebelelemente, die Schraubenfedern und den Stellmotor mit Spindel gegen äußere Umwelteinflüsse zuverlässig schützen.

Im Rahmen einer weiteren vorteilhaften Gestaltung kann das freie, dem Auflagerelement zugewandte Ende des Druckhebels im Auflagerelement in einem Langloch, dessen Längsachse parallel zur Motorlängsachse verläuft, gelagert sein. Eine derartige Lagerung läßt in unblockiertem Zustand des Motorlagers sowohl axiale als auch radiale Schwingungen des Motorlageroberteils mit dem darin befindlichen Hydrolager zu, so daß die gewünschte Federcharakteristik problemlos realisiert werden kann.

Im folgenden wird ein Ausführungsbeispiel des Gegenstandes der Erfindung anhand der beigefügten Zeichnungen näher erläutert. Es zeigt:
- Figur 1: eine Schnittdarstellung durch das erfindungsgemäße Motorlager in gelöstem Zustand der Schaltvorrichtung,
- Figur 2: das erfindungsgemäße Motorlager der Figur 1 in durch die Schaltvorrichtung blockiertem Zustand eines Federelementes und
- Figur 3: das erfindungsgemäße Motorlager der Figur 1 bei gelöster Schaltvorrichtung eines Federelementes und
- Figur 4: eine Schnittdarstellung entlang der Linie B-B aus Figur 1.

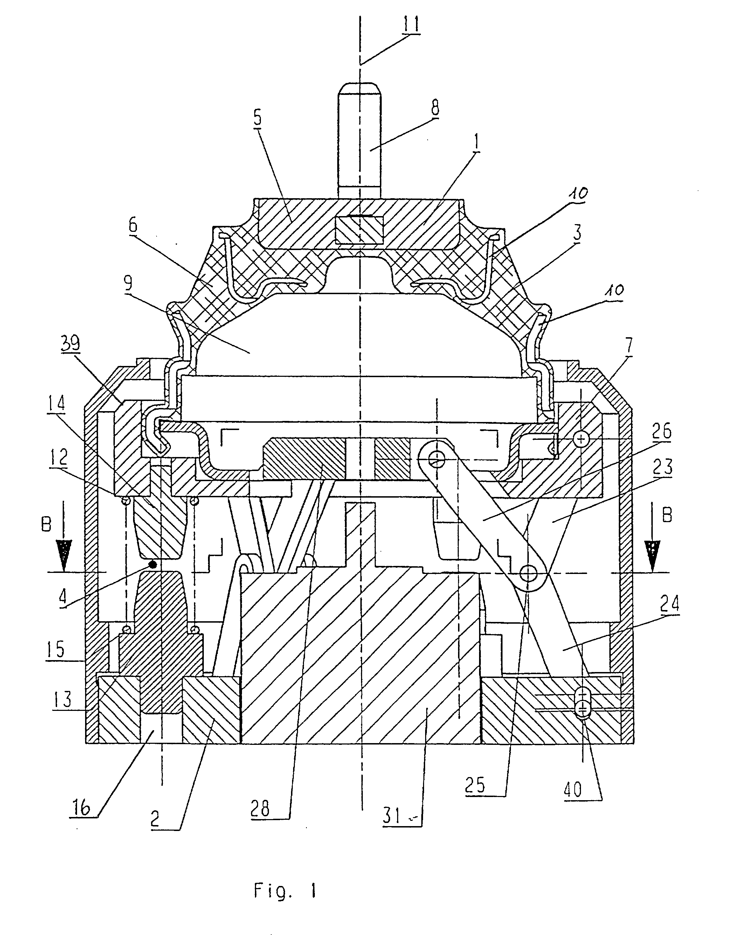

Wie der Figur 1 zu entnehmen ist, besitzt das erfindungsgemäße Motorlager im wesentlichen ein motorseitiges Traglager 1, ein karosserieseitiges Auflagerelement 2 und dazwischen in Reihe geschaltete Federelemente 3 und 4, welche über eine Zwischenplatte 7 kraftschlüssig miteinander verbunden sind.

Das motorseitige Traglager 1 weist eine scheibenförmige Traglagerplatte 5 und eine aus dieser Traglagerplatte 5 nach außen vorstehende zur Verbindung mit dem Motor vorgesehenen Schraubbolzen 8 auf.

Die Traglagerplatte 5 ist in ein Gummielement 6 eingebettet, welches Bestandteil des ersten Federelementes 3 ist. Das Federelement 3 besteht darüber hinaus aus einer flüssigkeitsgefüllten Kammer 9 an der der Traglagerplatte 5 abgewandten unteren Seite des Gummielementes 6. Den unteren Abschluß der Kammer 9 bildet die Zwischenplatte 7, mit der das die Kammer umschließende Gummielement 6 verbunden ist. In den äußeren Randbereichen des Gummielementes sind zur Stabilisierung gebogene Metallringe 10 einvulkanisiert. An der der Kammer 9 abgewandten Seite der Zwischenplatte 7 befinden sich auf einem gemeinsamen Radius um die zentrale Mittelachse 11 des Motorlagers konzentrisch angeordnet drei in diesem Ausführungsbeispiel als Schraubenfedern 12 gestaltete Federn, welche gemeinsam das zweite Federelement 4 bilden. Die Schraubenfedern 12 werden in ihrer Längsrichtung durch zwei von oben und unten in die Mittelbohrung der Schraubenfedern eingreifende Stützelemente 13 und 14 geführt und stabilisiert.

Das untere Stützelement 13 weist eine Schulter 15 auf, auf der das untere Ende der Schraubenfeder 12 zur Anlage kommt. Das der Schulter 15 abgewandte untere Ende des Stützelementes 13 ist in einer Bohrung 16 des Auflagerelementes 2 aufgenommen, wobei das Auflagerelement 2 hier nicht dargestellte Verbindungsmöglichkeiten zur karosserieseitigen Befestigung aufweist.

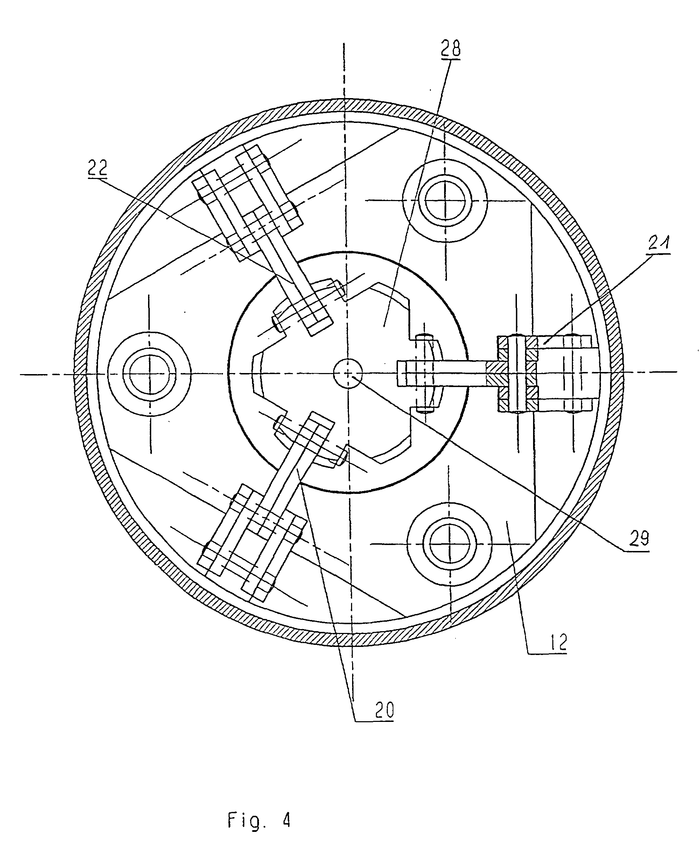

Aus der Figur 4 wird ersichtlich, daß in den Kreissegmentbereichen des Bauraumes zwischen Zwischenplatte 7 und Auflagerelement 2 drei Doppelkniehebelelemente 20, 21 und 22 angeordnet sind, die gemeinsam ein Doppelkniehebelgetriebe bilden, welche in gespanntem Zustand eine starre Verbindung von Zwischenplatte 7 und Auflagerelement 2 herbeiführen kann. Jedes Doppelkniehebelelement 20, 21, 22 besteht aus einem oberen Druckhebel 23 und einem unteren Druckhebel 24, die in einem gemeinsamen Drehlager 25 an ihren einander zugewandten Enden befestigt sind und einem ebenfalls in diesem Drehlager angelenkten Stellhebel 26. Der Stellhebel 26 wiederum ist an seinem dem Drehlager 25 abgewandten Ende mit einem Betätigungsglied 28 gelenkig verbunden. Dieses Betätigungsglied besteht im wesentlichen aus einer dreieckförmigen Platte, welche eine zentrische Bohrung 29 aufweist, in der eine in Richtung des Auflagerelementes 2 vorstehende Linearspindel 30 festgelegt ist. Diese Linearspindel 30 wiederum ist Bestandteil eines elektrischen Stellmotors 31, der am Auflagerelement 2 festgelegt ist und in den Bauraum zwischen Auflagerelement 2 und Zwischenplatte 7 hineinragt.

Innerhalb des elektrischen Stellmotors befindet sich eine axial festgelegte, drehbare Gewindemutter 32, deren Verdrehung durch den Motor ein Aus- und Einfahren der in der Gewindemutter 32 eingeschraubten Linearspindel 30 bewirkt. Das Ein- und Ausfahren der Linearspindel wiederum führt unter Zwischenschaltung des Betätigungsgliedes 28 und des Stellhebels 26 zu einer Spannbewegung oder einer Lösebewegung der Doppelkniehebelelemente 20, 21 und 22.

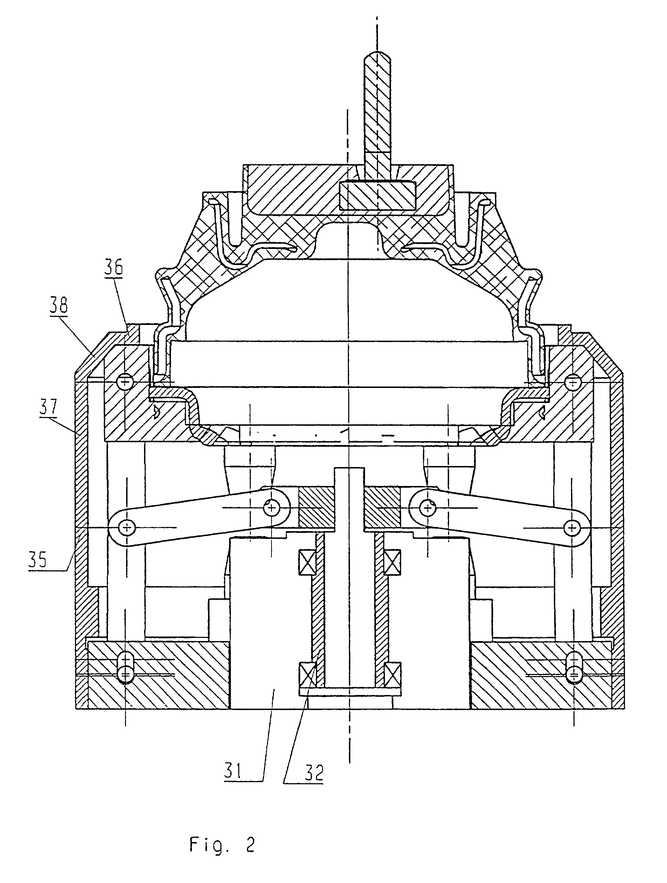

Aus der Figur 2 ist ersichtlich, daß der gespannte Zustand der Doppelkniehebelelemente 20, 21 und 22 im eingefahrenen Zustand der Linearspindel gegeben ist, wohingegen in ausgefahrenem Zustand der Linearspindel 30 die Doppelkniehebelelemente entspannt sind und somit eine Federwirkung des aus den Schraubenfedern 12 bestehenden Federelementes 4 gegeben ist.

Durch die Spannbewegung der Doppelkniehebelelemente wird die Zwischenplatte 7, an der das freie Ende der Druckhebel 23 der einzelnen Doppelkniehebelelemente gelenkig festgelegt ist, nach oben in Richtung des Federelementes 3 verschoben, so daß die unteren Schraubenfedern soweit entspannt werden, daß sie ohne Federfunktion sind.

Der gesamte untere Bereich des Motorlagers, in dem sich sowohl die Schraubenfedern 12 als auch die Doppelkniehebelelemente 20, 21 und 22 befinden, wird in diesem Ausführungsbeispiel durch ein topfförmiges Gehäuse 35 umschlossen, dessen Boden durch das Auflagerelement 2 gebildet ist. An einem oberen dem Auflagerelement 2 abgewandten Ende weist das Gehäuse 3 5 einen nach innen weisenden umgebörtelten Rand 36 auf, wobei zwischen dem Rand 36 und dem senkrechten Wandungsbereich 37 des Gehäuses 35 ein an der Innenseite des Gehäuses im Winkel von ungefähr 45 ° abgeschrägter Wandbereich 38 vorgesehen ist. Dieser Wandbereich 38 bildet eine konusförmige Lagerfläche, an der sich im verspannten Zustand der Doppelkniehebelelemente 20, 21, 22 eine korrespondierende Lagerfläche 39 der Zwischenplatte 7 abstützt. Der axiale Spalt zwischen dem Rand 36 und dem senkrechten Rand des Hydrolagers bestimmt die radiale Beweglichkeit in gelöstem Zustand.

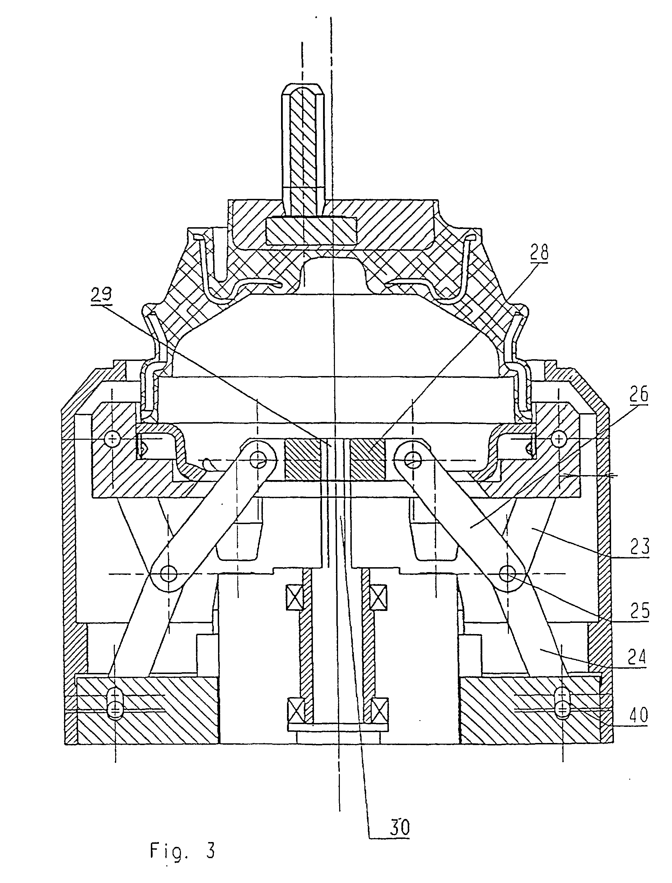

Aus den Figuren 2 und 3 ist ergänzend ersichtlich, daß das untere dem Auflagerelement 2 zugewandte und an diesem gelenkig festgelegte Ende des Druckhebels 24 ein Langloch 40 aufweist, wodurch im gelösten Zustand des Doppelkniehebelgetriebes eine axiale und radiale Beweglichkeit des Motorlageroberteils mit Zwischenplatte 7, Federelement 3 und Traglager 1 gegenüber dem unteren Auflagerelement 2 ermöglicht wird.

Es ist im Rahmen weiterer Ausgestaltungsvarianten natürlich denkbar, die Federwirkung des Federelementes 4 auf eine andere Anzahl von Schraubenfedern 12 zu verteilen oder diese durch eine andere Federgestaltung zu ersetzen. Darüber hinaus lassen sich je nach gewünschter Baugröße die Verspannkräfte zwischen dem Auflagerelement 2 und der Zwischenplatte 7 natürlich auf mehr als die in diesem Ausführungsbeispiel realisierten Doppelkniehebelelemente 20, 21 und 22 verteilen.

### Bezugszeichenliste:

- 1: Traglager
- 2: Auflagerelement
- 3: Federelement
- 4: Federelement
- 5: Traglagerplatte
- 6: Gummielement
- 7: Zwischenplatte
- 8: Schraubbolzen
- 9: Kammer
- 10: Metallring
- 11: zentrale Mittelachse
- 12: Schraubenfeder
- 13: Stützelement
- 14: Stützelement
- 15: Schulter
- 16: Bohrung
- 20: Doppelkniehebelelement
- 20: Doppelkniehebelelement
- 21: Doppelkniehebelelement
- 21: Druckhebel
- 22: Druckhebel
- 22: Drehlager
- 23: Stellhebel
- 24: Bohrung
- 25: Stellmotor
- 26: Gehäuse
- 27: Wandungsbereich
- 28: Lagerfläche
- 28: Betätigungsglied
- 29: Linearspindel
- 30: Gewindemutter
- 31: Rand
- 32: Wandbereich
- 33: Langloch

## Patentansprüche

1. Federratenschaltbares Motorlager mit einem Traglagerelement (1) und einem Auflagerelement (2), welches mindestens zwei parallel oder seriell zwischen Traglager- und Auflagerelement angeordnete Federelemente (3, 4) aufweist, wobei eines der Federelemente durch eine Schaltvorrichtung blockierbar ist,
**dadurch gekennzeichnet, daß**
die Schaltvorrichtung ein Doppelkniehebelgetriebe aufweist.

2. Federratenschaltbares Motorlager nach Anspruch 1,
**dadurch gekennzeichnet, daß**
das Doppelkniehebelgetriebe mehrere konzentrisch zur Motorlagermittelachse (11) angeordnete Doppelkniehebelelemente (20, 21, 22) mit je zwei Druckhebeln (23, 24) und je einem durch ein gemeinsames Betätigungsglied (28) bewegbaren Stellhebel (26) aufweisen, wobei der Stellhebel (26) mit seinem äußeren, dem Betätigungsglied (28) abgewandten Ende in einem Drehlager (25) mit je einem Ende der beiden Druckhebel (23, 24) verbunden ist und die äußeren freien, dem Drehlager (25) abgewandten Enden der Druckhebel (23, 24) jeweils mit dem Auflagerelement bzw. mit einer Zwischenplatte (7), die zwischen erstem (3) und zweitem Federelement (4) angeordnet ist, verbunden sind.

3. Federratenschaltbares Motorlager nach Anspruch 1 oder 2,
**dadurch gekennzeichnet, daß**
das blockierbare Federelement (4) aus mehreren konzentrisch zur Motorlagermittelachse (11) in Längsrichtung parallel zu dieser ausgerichteten beabstandet zueinander angeordneten Schraubenfedern (12) besteht.

4. Federratenschaltbares Motorlager nach Anspruch 3,
**dadurch gekennzeichnet, daß**
Schraubenfedern (12) und Doppelkniehebelelemente (20, 21, 22) wechselweise konzentrisch zur Motorlagermittelachse (11) angeordnet sind.

5. Federratenschaltbares Motorlager nach einem der Ansprüche 2 - 4,
**dadurch gekennzeichnet, daß**
das Betätigungsglied (28) durch einen elektrischen Stellmotor (31) mit einer Linearspindel (30) in Längsrichtung der Motorlagermittelachse (11) verschiebbar ist.

6. Federratenschaltbares Motorlager nach einem der Ansprüche 1 - 5,
**dadurch gekennzeichnet, daß**
die Schaltvorrichtung und das blockierbare Federelement (4) von einem Gehäuse (35) umschlossen sind, wobei sich das Gehäuse (35) in blockiertem Zustand des Federelementes (4) an einer konusförmigen Lagerfläche (39) abstützt, die Bestandteil der Zwischenplatte (7) zwischen erstem und zweitem Federelement ist.

7. Federratenschaltbares Motorlager nach Anspruch 2,
**dadurch gekennzeichnet, daß**
das freie, dem Auflagerelement (2) zugewandte Ende des Druckhebels (24) im Auflagerelement in einem Langloch (40), dessen Längsachse parallel zur Motorlagerlängsachse (11) verläuft, gelagert ist.

## Claims

1. Spring rate-switchable engine bearing with a supporting bearing element (1) and a support element (2) which comprises at least two spring elements (3, 4) disposed in parallel or series between the supporting bearing element and the support element, wherein one of the spring elements can be blocked by a switching device,
**characterised in that**
the switching device comprises a double toggle lever gear unit.

2. Spring rate-switchable engine bearing according to Claim 1,
**characterised in that**
the double toggle lever gear unit comprises a plurality of double toggle lever elements (20, 21, 22), which are disposed concentrically with the engine bearing centre axis (11), with two respective pressure levers (23, 24) and a respective setting lever (26) which can be moved by a common actuating member (28), wherein the setting lever (26) is connected by way of its outer end, which is remote from the actuating member (28), in a pivot bearing (25) to a respective end of the two pressure levers (23, 24), and the outer free ends, which are remote from the pivot bearing (25), of the pressure levers (23, 24) are in each case connected to the support element or to an intermediate plate(7) which is disposed between the first spring element (3) and the second spring element (4).

3. Spring rate-switchable engine bearing according to Claim 1 or 2,
**characterised in that**
the blockable spring element (4) consists of a plurality of helical springs (12) which are disposed in spaced fashion concentrically with the engine bearing centre axis (11) and oriented parallel to the latter in the longitudinal direction.

4. Spring rate-switchable engine bearing according to Claim 3,
**characterised in that**
the helical springs (12) and the double toggle lever elements (20, 21, 22) are disposed alternately concentrically with the engine bearing centre axis (11).

5. Spring rate-switchable engine bearing according to any one of Claims 2 - 4,
**characterised in that**
the actuating member (28) can be displaced by an electric servomotor (31) with a linear spindle (30) in the longitudinal direction of the engine bearing centre axis (11).

6. Spring rate-switchable engine bearing according to any one of Claims 1 - 5,
**characterised in that**
the switching device and the blockable spring element (4) are enclosed by a housing (35), wherein the housing (35) is supported when the spring element (4) is in the blocked state at a conical bearing face (39) which is a component of the intermediate plate (7) between the first and the second spring element.

7. Spring rate-switchable engine bearing according to Claim 2,
**characterised in that**
the free end, which faces the support element (2), of the pressure lever (24) is mounted in the support element (2) in an oblong hole (40), the longitudinal axis of which extends parallel to the engine bearing longitudinal axis (11).

## Revendications

1. Support de moteur à raideur de ressorts commandée avec un élément de palier porteur (1) et un élément support (2), qui présente au moins deux éléments de ressort (3, 4) disposés en parallèle ou en série entre l'élément de palier porteur et l'élément support, l'un des éléments de ressort pouvant être bloqué par un dispositif de commutation,
**caractérisé en ce que**
le dispositif de commutation présente un mécanisme à double genouillère.

2. Support de moteur à raideur de ressorts commandée selon la revendication 1,
**caractérisé en ce que**
le mécanisme à double genouillère présente plusieurs éléments à double genouillère (20, 21, 22) disposés de façon concentrique par rapport à l'axe médian du support de moteur (11) comprenant chacun deux leviers de pression (23, 24) et un levier de commande (26) déplaçable au moyen d'un organe d'actionnement (28) commun, le levier de commande (26) étant relié par son extrémité extérieure, opposée à l'organe d'actionnement (28), dans un palier tournant (25), à respectivement une extrémité des deux leviers de pression (23, 24) et les extrémités extérieures, libres, opposées au palier tournant (25), des leviers de pression (23, 24) étant reliés respectivement à l'élément support ou à une plaque intermédiaire (7), qui est disposée entre le premier élément de ressort (3) et le second élément de ressort (4).

3. Support de moteur à raideur de ressorts commandée selon la revendication 1 ou 2,
**caractérisé en ce que**
l'élément de ressort (4) blocable est constitué de plusieurs ressorts cylindriques (12) disposés à distance les uns des autres, de façon concentrique par rapport à l'axe médian du support de moteur (11) et orienté dans le sens de la longueur parallèlement à cet axe.

4. Support de moteur à raideur de ressorts commandée selon la revendication 3,
**caractérisé en ce que**
des ressorts cylindriques (12) et des éléments à double genouillère (20, 21, 22) sont disposés à tour de rôle de façon concentrique autour de l'axe médian du support de moteur (11).

5. Support de moteur à raideur de ressorts commandée selon l'une quelconque des revendications 2 à 4,
**caractérisé en ce que**
l'organe d'actionnement (28) peut être déplacé par un servomoteur (31) électrique avec une broche linéaire (30) dans le sens longitudinal de l'axe médian du support de moteur (11).

6. Support de moteur à raideur de ressorts commandée selon l'une quelconque des revendications 1 à 5,
**caractérisé en ce que**
le dispositif de commutation et l'élément de ressort (4) blocable sont entourés d'un boîtier (35), le boîtier (35) s'appuyant sur une surface de palier (39) en forme de cône lorsque l'élément de ressort (4) est bloqué, surface qui fait partie intégrante de la plaque intermédiaire (7) entre le premier et le second éléments de ressort.

7. Support de moteur à raideur de ressorts commandée selon la revendication 2,
**caractérisé en ce que**
l'extrémité libre, tournée vers l'élément support (2), du levier de pression (24) est logée dans l'élément support dans un trou oblong (40), dont l'axe longitudinal est parallèle à l'axe longitudinal du support de moteur (11).
